# EUROPÄISCHE PATENTSCHRIFT

(11) **EP 3 084 241 B1**
(45) Veröffentlichungstag und Bekanntmachung des Hinweises auf die Patenterteilung: **11.04.2018**
(21) Anmeldenummer: 14808964.2
(22) Anmeldetag: 04.12.2014
(51) Int. Cl.: F16C 37/00, F16C 33/66, B04B 1/20, B04B 9/12

(54) **LAGERANORDNUNG FÜR ZENTRIFUGEN**
BEARING ARRANGEMENT FOR A CENTRIFUGE
AGENCEMENT DE PALIER POUR UNE CENTRIFUGEUSE

(30) Priorität: 19.12.2013 DE 102013114510
(43) Veröffentlichungstag der Anmeldung: 26.10.2016
(73) Patentinhaber: GEA Mechanical Equipment GmbH, 59302 Oelde (DE)
(72) Erfinder: OSTKAMP, Wilhelm, 59302 Oelde (DE)
(74) Vertreter: Specht, Peter
(86) Internationale Anmeldenummer: PCT/EP2014/076528
(87) Internationale Veröffentlichungsnummer: WO 2015/090994

(56) Entgegenhaltungen:
- EP-B1- 2 435 189
- DE-B- 1 147 447
- US-A1- 2007 177 835
- US-A1- 2009 129 714

## Beschreibung

Die vorliegende Erfindung betrifft eine Lageranordnung nach dem Oberbegriff des Anspruchs 1.

Eine solche Lageranordnung ist aus der DE 11 47 447 B bekannt. Dekanterzentrifugen bzw. Vollmantel-Schneckenzentrifugen sind aus dem Stand der Technik einschlägig bekannt und werden bevorzugt dort eingesetzt, wo ein Schleudergut von Feststoffen geklärt und/oder das Schleudergut in verschieden dichte Phasen getrennt werden soll. Eine Bauart einer Dekanterzentrifuge bzw. einer Vollmantel-Schneckenzentrifuge ist der sogenannte Gegenstromdekanter. Der Rotor einer solchen Zentrifuge besteht aus einer Vollmanteltrommel mit vorzugsweise zylindrischem und konischem Teil und einem darin gelagerten Schneckenkörper. Beide laufen mit einer hohen Drehzahl um, wobei die Schnecke eine vergleichsweise geringe Differenzdrehzahl zur Trommel aufweist. Für derartige Zentrifugen ist die Erfindung besonders gut geeignet.

Der Rotor wird üblicherweise über ein Zugmittelgetriebe, wie z.B. einem Keilriementrieb von einem Elektromotor angetrieben. Er ist üblicherweise beidseitig in Wälzlagern gelagert. Um Schwingungen zu vermeiden, sind die rotierenden Teile einer Dekanterzentrifuge entsprechend steif auszuführen. Dies erfordert entsprechend reichlich bemessene Durchmesser der rotierenden Bauteile.

Dies führt dazu, dass die Umfangsgeschwindigkeiten von Wälzlagern relativ hoch werden. Aus diesem Grund sind alternative Bauformen entstanden, die das o.g. Problem zu umgehen versuchen. Bei einer alternativen Bauform sind die Lager elastisch ausgelegt, so dass sich der Rotor bei Unwuchten um eine neue Schwerelinie einstellen kann.

In der DE 1 943 204 wird eine Wellenbaugruppe für Zentrifugen und ähnliche Vorrichtungen offenbart. Optimierbar an der in der DE 1 943 204 vorgestellten Lösung für die vorgestellte Lagerkühlung ist die signifikant hohe Anzahl von Teilen, die der Wärmabfuhr aus dem Lager dienen und die in die Separatorzentrifuge aufwendig konstruktiv integriert werden müssen.

In der DE 10 2008 015 134 A1 wird eine Getriebeanordnung einer Vollmantel-Schneckenzentrifuge vorgestellt. Zur Schmierung von zu schmierenden Elementen der Getriebeanordnung wird eine Art Schmiermittel-Ausgleichssystem vorzugsweise ein Schmiermittel-Ausgleichskreislauf verwendet, mit dem ein fließfähiges Schmiermittel -vorzugsweise Schmieröl- in die Getriebeanordnung geleitet werden kann. Das Schmiermittel wird über eine Drehdurchführung in eine zentrisch in einer Antriebswelle eingebrachten Bohrung geführt und mündet über eine in radialer Richtung angeordneten Bohrung in der Antriebswelle im Bereich eines zu schmierenden Lagers.

In der DE 10 2009 022 972 A1 wird eine Zentrifuge mit einem Schmiermittelsystem vorgestellt. Das Schmiermittelsystem weist einen Einspritzöler auf, der funktional eine Minimalmengenschmierung der Lagerung der Zentrifuge realisiert.

Die Lösungen zur Schmiermittelversorgung bzw. der Lagerkühlung haben sich in der Praxis durchaus bewährt, nichtsdestotrotz ist eine Lebensdauererhöhung der Lager - auch im Hinblick auf verlängerte Wartungsintervalle der üblicherweise als Dauerläufer arbeitenden Dekanterzentrifugen bzw. Vollmantel-Schneckenzentrifugen - wünschenswert.

Die Erfindung hat die Aufgabe, dieses Problem zu beheben.

Die vorliegende Erfindung löst dieses Problem durch den Gegenstand des Anspruchs 1.

Derart wird auf einfache Weise verhindert, dass Öl in die Kühlluftableitung fließen kann.

Die Kühlung des Wälzlagers verlängert auf einfache Weise dessen Lebensdauer und kann auch in einer Wartungsintervallverlängerung resultieren. Die niedrigere Betriebstemperatur führt zu einem dickeren trennenden Schmierfilm im Wälzkörperkontakt und zu längerer Gebrauchsdauer des Schmieröls.

In einer besonders vorteilhaften Ausführungsvariante der vorliegenden Erfindung wird ein andauernder Schmiermittelstrom, der durch die Schmiermittelzuleitung dem zu kühlenden Wälzlager zugeleitet wird, bzw. ein andauernder Kühlluftstrom, der dem zu kühlenden Wälzlager durch die Kühlluftzuleitung zugeleitet wird, durch die Öffnung des Wälzlagers zwischen Wälzlagerinnenring und Wälzlageraußenring geführt. Es ist aber auch eine gepulste Zuleitung des Schmiermittels in kleinen Pulsen denkbar. Auch die Kühlluft kann nur zeitweise zugeleitet werden. Erfindungsgemäß werden das Schmiermittel und die Kühlluft durch separate Leitungen abgeleitet. Diese Variante ist konstruktiv etwas aufwendiger, ermöglicht aber eine separate Ableitung der Kühlluft und des Schmiermittels.
Es ist auch möglich, dass die Kühlluftzuleitung und die Schmiermittelzuleitung als eine einzige integrierte Leitung ausgebildet sind und dass gepulst abwechselnd Kühlluft und Schmiermittel zugeführt werden. Die Pulse können auch verschieden lang sein. Besonders vorteilhaft ist die Zuleitung durch separate Kanäle.
Vorteilhafterweise ist die Schmiermittelzuleitung durch eine Bohrung gebildet, die sich stromabwärts düsenartig verengt und in einer Düse im Bereich eines Wälzlagers in einen Innenraum eines Gehäuses mündet. Durch die düsenartige Gestaltung der Schmiermittelzuleitung wird die Strömungsgeschwindigkeit des Schmiermittels erhöht, so dass insbesondere bei der Verwendung einer Minimalmengenschmierung die Schmiermitteldosierung in hochfrequenten Impulsen erfolgen kann.
In einer weiteren vorteilhaften Ausführungsvariante der Erfindung wird ein Wälzlager durch Dichtungen gegen die Umgebung und gegen eine Hohlwelle abgedichtet, wobei die Dichtungen, die das Wälzlager gegen die Umgebung abdichten, dynamisch wirkende Dichtungen sind. Dadurch kann sowohl der Schmiermittelstrom und insbesondere auch der Kühlluftstrom gezielt an das zu schmierende und zu kühlende Lager geleitet werden, ohne dass sich beide Ströme immer mehr aufteilen und sich ihre Wirksamkeit so in größeren Innenräumen im Gehäuse verliert bzw. eingeschränkt wird.
Die Erfindung schafft ferner die vorteilhafte Zentrifuge des Anspruchs 13.
Weitere vorteilhafte Ausführungen der Erfindung sind den Unteransprüchen zu entnehmen.
Ausführungsbeispiele des erfindungsgemäßen Gegenstandes sind in der Zeichnung dargestellt und werden im Folgenden näher beschrieben. Es zeigt:
- Figur 1: eine schematische Vorderansicht einer Dekanterzentrifuge bzw. Vollmantel-Schneckenzentrifuge ;
- Figur 2: eine Vorderansicht einer ersten Variante einer erfindungsgemäßen Wälzlagerkühlungseinrichtung im Schnitt.
- Figur 3: eine Vorderansicht einer zweiten Variante nicht erfindungsgemäßen Wälzlagerkühlungseinrichtung im Schnitt.
- Figur 4: eine Vorderansicht einer dritten Variante einer erfindungsgemäßen Wälzlagerkühlungseinrichtung im Schnitt.

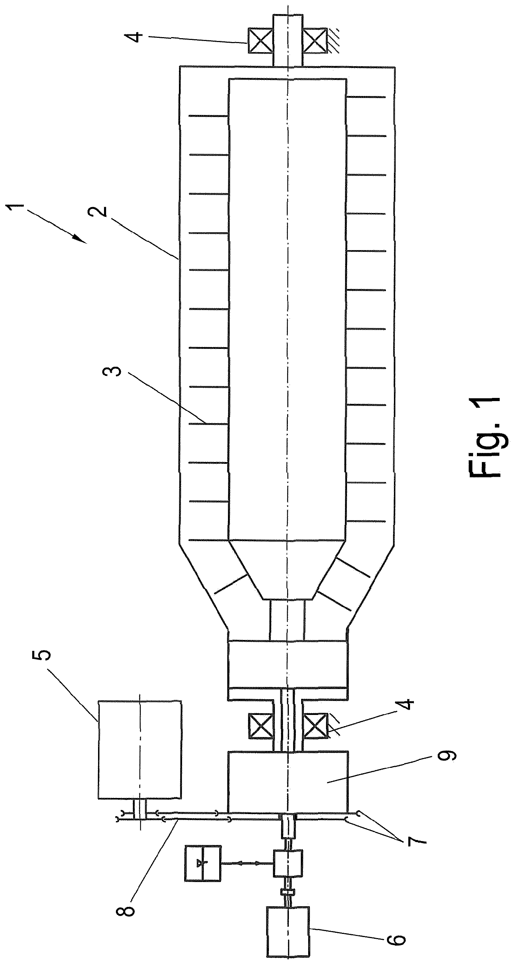

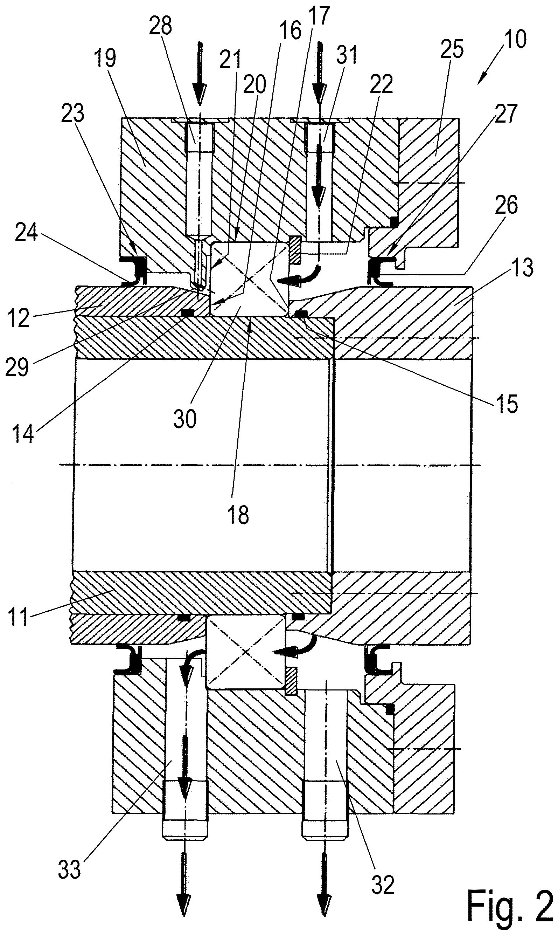

In Fig. 1 ist eine Vorderansicht einer Dekanterzentrifuge bzw. Vollmantel-Schneckenzentrifuge 1 -im Folgendem kurz als Zentrifuge bezeichnet- schematisch dargestellt. Die Zentrifuge 1 weist eine drehbare Trommel 2 auf. Die Trommel 2 ist durch zwei Trommellager 4 drehbar gelagert. Die Trommellager 4 sind vorzugsweise als Wälzlager 30 (Fig. 2) ausgeführt. Die Zentrifugel weist ferner eine Schnecke 3 auf, die koaxial in der Trommel 2 angeordnet ist. Die Trommel 2 wird durch einen Antriebsmotor 5 über ein Zugmittelgetriebe angetrieben, das hier beispielhaft Riemenscheiben 7 und Antriebsriemen 8 aufweist. Das Zugmittelgetriebe arbeitet auf ein weiteres Getriebe 9, das die Trommel 2 antreibt. Die Zentrifuge weist vorzugsweise ferner einen weiteren Antriebsmotor 6 auf, der über das Getriebe 9 zum Antrieb der Schnecke 3 dient und eine Differenzdrehzahl im Verhältnis zur Trommel 2 bewirkt.

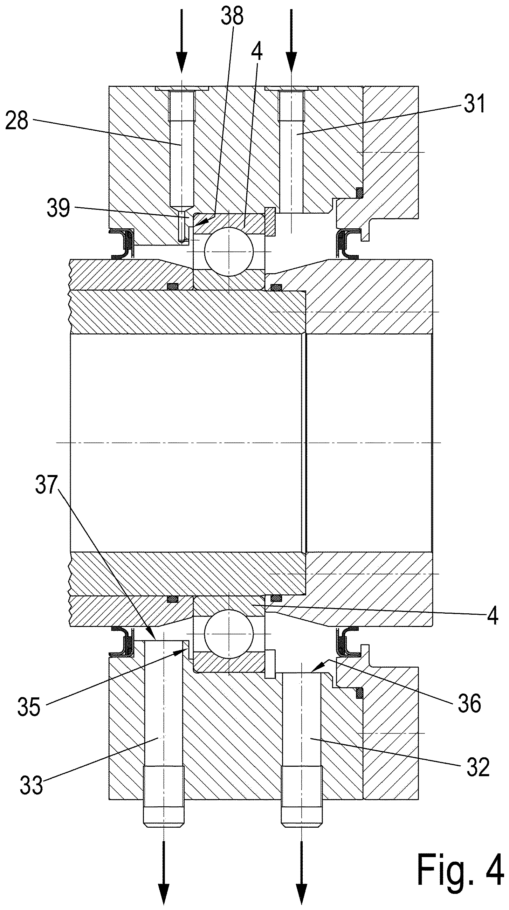

In Fig. 2 und 4 sind Lageranordnungen mit jeweils einem Wälzlager mit beispielhaften und vorteilhaften Varianten erfindungsgemäßer Wälzlagerluftkühlungen 10 dargestellt.
Als Wälzlageranordnungen sind insbesondere auch zweireihige Wälzlager oder zwei Wälzlager nebeneinander denkbar. Es kommen ferner insbesondere Rillenkugellager, Schrägkugellager und / oder Zylinderrollenlager in Frage.
Die Wälzlageranordnung des Trommellagers 4 der Fig. 2, 3 und 4 weist eine Hohlwelle 11 auf, auf die ein Ring 12 und ein weiterer Ring 13 aufgeschoben ist. Beide Ringe 12, 13 sind gegen die Hohlwelle 11 mit Dichtungen 14, 15 abgedichtet. Der Ring 13 ist mit Befestigungselementen, wie z.B. Schrauben (nicht dargestellt) an der Hohlwelle 11 in axialer Richtung befestigt. Die beiden Ringe 12, 13 bilden jeweils eine Wellenschulter 16, 17 und legen einen Wälzlagerinnenring 18 auf der Hohlwelle 11 axial fest. Die Ringe 12, 14 weiten sich zudem vom Lager 4 aus hier vorzugsweise jeweils konisch auf bzw. weisen konische Bereiche auf. Die Ringe 12, 13 setzen am Lager 4 an einem weiter innen liegenden Radius an.
Durch die konischen Abschnitte wird gut und konstruktiv einfach sichergestellt, dass das Schmiermittel von der Austrittsöffnung der Schmiermittelzuleitung gut in das Lager fließen und sich dort verteilen kann.
Ferner weist die Wälzlageranordnung ein Gehäuse 19 auf. Das Gehäuse 19 bildet im Bereich eines Wälzlageraußenringes 20 eine Gehäuseschulter 21 aus, an der der Wälzlageraußenring 20 gehäuseseitig axial festgelegt ist. Darüber hinaus weist das Gehäuse 19 einen Sicherungsring 22 für Gehäuse auf, mit der der Wälzlageraußenring 20 ebenfalls gehäuseseitig axial festgelegt ist.
Das Gehäuse 19 weist ferner einen Absatz 23 auf, in den eine Dichtung 24 eingesetzt ist. Die Dichtung 24 stützt sich wellenseitig auf den Ring 12 ab und funktioniert als dynamische Dichtung, ähnlich, wie ein Radialwellendichtring.

Die Wälzlageranordnung weist darüber hinaus einen Deckel 25 auf, der mit Befestigungselementen, wie z.B. Schrauben (nicht dargestellt) am Gehäuse 19 in axialer Richtung befestigt ist. Der Deckel 25 weist eine gehäuseseitige Dichtung 26 auf. Der Deckel 25 weist ferner einen Absatz 27 auf, in die die Dichtung 26 eingesetzt ist. Die Dichtung 26 stützt sich wellenseitig auf den Ring 13 ab und funktioniert als dynamische Dichtung, hier ein Radialwellendichtring. Denkbar sind auch andere Dichtungsanordnungen, z.B. doppelt wirkende Wellendichtringe, Gleitringdichtungen oder zwei oder mehr Radialwellendichtringe nebeneinander.

Das Gehäuse 19 weist darüber hinaus eine Schmiermittelzuleitung 28 in Form einer Bohrung mit stromabwärts düsenförmig verengendem Durchmesser auf. Die Bohrung mündet in einer Düse 29, die sich in der Gehäuseschulter 21 befindet, so dass ein durch die Düse 29 geleiteter Schmiermittelstrom zwischen Wälzlagerinnenring 18 und Wälzlageraußenring 20 in das Wälzlager 30 geleitet wird. Der Austritt der Schmiermittelzuleitung kann auch rein radial ausgerichtet sein und/oder auch schräg (zwischen radialer Richtung axialer Richtung) oder rein axial. In Fig. 2 endet die Schmiermittelzuleitung kurz vor dem konischen Abschnitt des Ringes 12.

Insbesondere wird vorzugsweise eine Ölumlaufschmierung nach Art eines Kreislaufes realisiert. Dabei laufen vorzugsweise 50l/h bis 150l/h Schmiermittel im Kreislauf um.

Das Schmiermittel -vorzugsweise Schmieröl- kann aber z.B. auch nach dem Prinzip einer Minimalmengenschmierung in einzelnen kleinen Impulsen (nach dem Prinzip der an sich bekannten Minimalmengenschmierung) durch die Düse 29 in das Wälzlager 30 geführt werden (siehe die EP 2 435 189 B1). Dabei werden vorzugsweise alle 60 bis 180 sec Schmiermittelmengen zwischen 5mm³ und 1000 mm³ abgegeben.

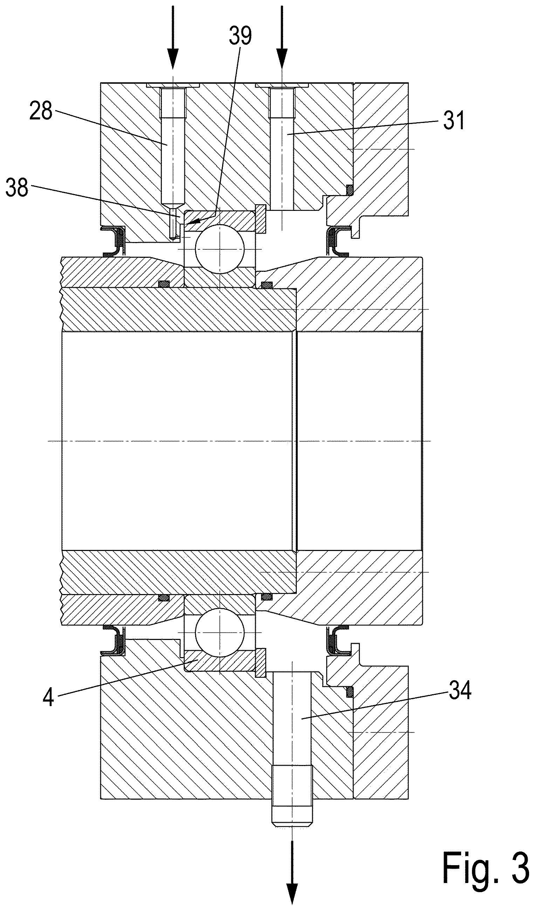

Das Gehäuse 19 weist ferner eine Wälzlagerkühlungseinrichtung auf. Diese weist wiederum wenigstens eine Kühlluftzuleitung 31 auf. Diese ist hier in Richtung des Deckels 25 von der Schmiermittelzuleitung 28 beabstandet angeordnet und mündet hier im Bereich des Sicherungsringes 22 in den Innenraum des Gehäuses 19. Durch die Dichtungen 24 und 26 ist der Gehäusebereich, in dem das Wälzlager 30 angeordnet ist, gegen die Umgebung und durch die Dichtungen 14, 15 gegen die Hohlwelle 11 abgedichtet. Das Schmiermittel kann so durch das Wälzlager 30 fließen und das Wälzlager 30 wird geschmiert.. Die Kühlluft umfließt das Wälzlager und kühlt beim vorbeistreichen und / oder beim Durchfließen des Wälzlagers dasselbe. Das Gehäuse 19 weist außerdem jeweils eine Schmiermittelableitung 32 und eine Kühlluftableitung 33 auf.
Die Schmiermittelzuleitung 28 ist beabstandet zur Kühlluftzuleitung 31 und gegenüberliegend der Kühlluftableitung 33 und die Kühlluftzuleitung 31 gegenüberliegend der Schmiermittelableitung 32 in Bezug auf das Wälzlager 30 angeordnet. Die Schmiermittelableitung 32 liegt auf der deckelzugewandten Gehäuseseite, während die Kühlluftableitung 33 auf der deckelabgewandten Gehäuseseite positioniert ist. Durch die wechselseitige Anordnung von Schmiermittelzuleitung 28 und Schmiermittelableitung 32 bzw. von Kühlluftzuleitung 31 und Kühlluftableitung 33 ist sowohl der Schmiermittelstrom als auch der Kühlluftstrom gezwungen, das Wälzlager 30 zu durchfließen, so dass Wärme vom Wälzlagerinnenring 18, vom Wälzlageraußenring 20 sowie von den Wälzlagerkugeln durch den Kühlluftstrom abgeführt wird. Der Kühlluftstrom wirkt also unmittelbar an den Stellen des Wälzlagers 30, an denen Wärme durch Reibung entsteht.
Dadurch wird eine gute Kühlwirkung insbesondere durch den Kühlluftstrom erreicht. Zum Beleg dieses Effektes wurden Versuche mit einem Dekanter CF 6000 der Anmelderin durchgeführt. Die Trommeldrehzahl lag bei ca.3500 U/min. Bei einem Kühlluftvolumenstrom von 10 m³/h, der Raumtemperatur aufwies (ca. 20° C-25° C), wurde eine Temperaturreduzierung des Wälzlagers 30 bei Betriebsdrehzahl um 18 K und bei einem Kühlluftvolumenstrom von 30 m³/h eine Temperaturreduzierung des Wälzlagers 30 bei Betriebsdrehzahl um 23 K ermöglicht.
Besonders vorteilhaft ist die Erfindung aufgrund dieses Effektes bei der zentrifugalen Trennung eines warmen Schleudergutes mit einer hohen Temperatur von z.B. mehr als 100 ° und/oder bei sehr hohen Umgebungstemperaturen über 25°C. Die Kühllufttemperatur liegt vorzugsweise unter 25°, insbesondere unter 15° C. Die Kühlluft weist vorzugsweise und vorteilhaft eine niedrigere Temperatur als die Schleudergut - und/oder die Umgebungstemperatur an der Zentrifuge auf.
Aus einer derartigen Temperaturreduzierung des Wälzlagers 30 bei Betriebsdrehzahl resultiert eine entsprechende Lebensdauererhöhung bzw. eine Wartungsintervallverlängerung des Wälzlagers 30, da das kühlere Schmiermittel länger verwendbar ist und da das Lager geschont wird. Durch die niedrigere Temperatur wird zusätzlich die Viskosität günstig beeinflusst und es stellt sich ein dickerer trennender Schmierfilm im Wälzlager ein, was den Verschleiß reduziert.
Die Anordnung der Fig. 2 ist besonders vorteilhaft, es sind aber auch andere Anordnungen von Kühlluftzu- und ableitung und Schmiermittelzu- und ableitung denkbar. Nach Fig. 3 sind die Kühlluftableitung und die Schmiermittelableitung abweichend von der Erfindung als eine einzige integrierte Leitung 34 ausgebildet, so dass die Ableitung der Kühlluft und des Schmiermittels gemeinsam durch diese Leitung 34 erfolgt. Diese Variante ist konstruktiv besonders einfach realisierbar. Vorzugsweise ist ein hier nicht dargestellter Ölabscheider der Leitung 34 nachgeschaltet, welcher z.B. als Hydrozyklon oder als Filter ausgebildet sein kann.
Nach Fig.4 ist ferner vorgesehen, dass die Kühlluftableitung 33 beabstandet zum Lager 4 angeordnet ist, wobei zwischen der Kühlluftableitung 33 und dem Lager vorzugsweise ein ringförmiger Absatz/Spalt 35 ausgebildet ist, in welchem sich im Betrieb bei Drehungen radial außen Schmiermittel sammelt, das durch die Schmiermittelableitung 32 abgeleitet werden kann. Deren Eintrittsöffnung 36 liegt zudem auf einem größeren Radius als jener der Eintrittsöffnung 37 der Kühlluftableitung 33, so dass bei Drehungen das fließfähige Schmiermittel durch die Schmiermittelableitung 32 abgeführt wird. Derart wird auf einfache Weise verhindert, dass das Öl in die Kühlluftableitung 33 fließen kann. Diese Variante stellt somit einen integrierten Ölabscheider dar. Es wäre auch denkbar, eine sich radial ersteckende Scheibe seitlich am Lager anzuordnen, um zu verhindern, dass das Schmiermittel in die Kühlluftableitung fließen kann (nicht dargestellt).
In Fig. 3 und 4 ist auch zu erkennen, dass die Austrittsöffnung 38 der Schmiermittelzuleitung 28 auf einem kleineren Radius des Gehäuses 19 liegt als jener der Kühlluftzuleitung 31. Zudem ist es vorteilhaft, dass die Schmiermittelleitung im Endbereich 39 nicht ausschließlich radial verläuft sondern winklig, so dass das Schmieröl auch mit einer axialen Geschwindigkeitskomponente zum Lager 4 geleitet wird

### Bezugszeichenliste

- 1: Dekanterzentrifuge bzw. Vollmantel-Schneckenzentrifuge
- 2: Trommel
- 3: Schnecke
- 4: Trommellager
- 5: Antriebsmotor
- 6: Antriebsmotor
- 7: Riemenscheiben
- 8: Antriebsriemen
- 9: Getriebe
- 10: Wälzlagerluftkühlung
- 11: Hohlwelle
- 12: Ring
- 13: Ring
- 14: Dichtung
- 15: Dichtung
- 16: Wellenschulter
- 17: Wellenschulter
- 18: Wälzlagerinnenring
- 19: Gehäuse
- 20: Wälzlageraußenring
- 21: Gehäuseschulter
- 22: Sicherungsring
- 23: Absatz
- 24: Dichtung
- 25: Deckel
- 26: Dichtung
- 27: Absatz
- 28: Schmiermittelzuleitung
- 29: Düse
- 30: Wälzlager
- 31: Kühlluftzuleitung
- 32: Schmiermittelableitung
- 33: Kühlluftableitung
- 34: Leitung
- 35: Spalt
- 36: Eintrittsöffnung
- 37: Eintrittsöffnung
- 38: Austrittsöffnung
- 39: Endbereich

## Patentansprüche

1. Lageranordnung mit wenigstens einem Wälzlager (30), insbesondere zur Lagerung eines Rotors, insbesondere einer Trommel (2), einer Zentrifuge, insbesondere einer Vollmantel-Schneckenzentrifuge (1), aufweisend eine Wälzlagerkühlungseinrichtung (10) mit wenigstens einer Schmiermittelzuleitung (28), wenigstens einer Schmiermittelableitung (32) und einer separaten Kühlluftableitung (33), wobei die Wälzlagerkühlungseinrichtung (10) ferner wenigstens eine Kühlluftzuleitung (31) aufweist, **dadurch gekennzeichnet, dass** eine Eintrittsöffnung (36) der Schmiermittelableitung (32) auf einem größeren Radius liegt als jener einer Eintrittsöffnung (37) der Kühlluftableitung (33).

2. Lageranordnung nach Anspruch 1, **dadurch gekennzeichnet, dass** die Schmiermittelableitung (32) beabstandet zur Kühlluftableitung (33) angeordnet ist.

3. Lageranordnung nach einem der vorstehenden Ansprüche, **dadurch gekennzeichnet, dass** die Schmiermittelzuleitung (28) beabstandet zur Kühlluftzuleitung (31) angeordnet ist.

4. Lageranordnung nach einem der vorstehenden Ansprüche, **dadurch gekennzeichnet, dass** die Kühlluftableitung (33) beabstandet zum Lager angeordnet ist.

5. Lageranordnung nach einem der vorstehenden Ansprüche, **dadurch gekennzeichnet, dass** die Schmiermittelzuleitung gegenüberliegend der Kühlluftableitung (33) und die Kühlluftzuleitung (31) gegenüberliegend der Schmiermittelableitung (32) in Bezug auf das Wälzlager (30) angeordnet ist.

6. Lageranordnung nach einem der vorstehenden Ansprüche, **dadurch gekennzeichnet, dass** ein Schmiermittelstrom, der durch die Schmiermittelzuleitung (28) dem Wälzlager (30) zugeleitet wird, bzw. ein Kühlluftstrom, der dem Wälzlager (30) durch die Kühlluftzuleitung (31) zugeleitet wird, durch axiale Öffnungen des Wälzlagers (30) zwischen Wälzlagerinnenring (18) und Wälzlageraußenring (20) geführt wird.

7. Lageranordnung nach einem der vorgenannten Ansprüche, **dadurch gekennzeichnet, dass** die Schmiermittelzuleitung (28) eine Bohrung ist, die sich stromabwärts düsenartig verengt.

8. Lageranordnung nach einem der vorgenannten Ansprüche, **dadurch gekennzeichnet, dass** die Schmiermittelzuleitung (28) mit einer Düse (29) im Bereich des Wälzlagers (30) in einen Innenraum eines Gehäuses (19) mündet.

9. Lageranordnung nach einem der vorgenannten Ansprüche, **dadurch gekennzeichnet, dass** das Wälzlager (30) durch Dichtungen (14, 15 bzw. 24, 26) gegen die Umgebung und gegen eine Hohlwelle (11) abgedichtet ist.

10. Lageranordnung nach einem der vorgenannten Ansprüche, **dadurch gekennzeichnet, dass** die Dichtungen (24, 26), die das Wälzlager (30) gegen die Umgebung abdichten, dynamisch wirkende Dichtungen sind.

11. Lageranordnung nach einem der vorstehenden Ansprüche, **dadurch gekennzeichnet, dass** die Kühlluftzuleitung und die Schmiermittelzuleitung als eine einzige integrierte Leitung ausgebildet sind.

12. Zentrifuge, insbesondere Dekanter oder Separator, mit einer oder mehreren Lageranordnungen nach einem der Ansprüche 1 bis 12, die als Rotorlager, insbesondere Trommellager, dient/dienen.

## Claims

1. A bearing arrangement having at least one rolling bearing (30), in particular for bearing a rotor, in particular a bowl (2), of a centrifuge, in particular a solid bowl centrifuge (1), having a rolling bearing cooling apparatus (10) having at least one lubricant supply line (28), at least one lubricant discharge line (32) and a separate cooling air discharge line (33), wherein the rolling bearing cooling apparatus (10) furthermore has at least one cooling air supply line (31) **characterized in that** an inlet opening (36) of the lubricant discharge line (32) lies on a larger radius than that of an inlet opening (37) of the cooling air discharge line (33).

2. The bearing arrangement as claimed in claim 1, **characterized in that** the lubricant discharge line (32) is arranged spaced from the cooling air discharge line (33).

3. The bearing arrangement as claimed in one of the preceding claims, **characterized in that** the lubricant supply line (28) is arranged spaced from the cooling air supply line (31).

4. The bearing arrangement as claimed in one of the preceding claims, **characterized in that** the cooling air discharge line (33) is arranged spaced from the bearing.

5. The bearing arrangement as claimed in one of the preceding claims, **characterized in that** in relation to the rolling bearing (30), the lubricant supply line is arranged opposite the cooling air discharge line (33), and the cooling air supply line (31) is arranged opposite the lubricant discharge line (32).

6. The bearing arrangement as claimed in one of the preceding claims, **characterized in that** a lubricant flow that is supplied to the rolling bearing (30) through the lubricant supply line (28), and/or a cooling air flow that is supplied to the rolling bearing (30) through the cooling air supply line (31), is/are guided through axial openings in the rolling bearing (30), between the rolling bearing inner ring (18) and the rolling bearing outer ring (20).

7. The bearing arrangement as claimed in one of the preceding claims, **characterized in that** the lubricant supply line (28) is a bore that narrows downstream in the manner of a nozzle.

8. The bearing arrangement as claimed in one of the preceding claims, **characterized in that** the lubricant supply line (28) opens into an inner space in a housing (19) by means of a nozzle (29) in the region of the rolling bearing (30).

9. The bearing arrangement as claimed in one of the preceding claims, **characterized in that** the rolling bearing (30) is sealed off from the surrounding environment and from a hollow shaft (11) by seals (14, 15 and 24, 26 respectively).

10. The bearing arrangement as claimed in one of the preceding claims, **characterized in that** the seals (24, 26) that seal the rolling bearing (30) off from the surrounding environment are dynamic seals.

11. The bearing arrangement as claimed in one of the preceding claims, **characterized in that** the cooling air supply line and the lubricant supply line take the form of a single integrated line.

12. A centrifuge, in particular a decanter or separator, having one or more bearing arrangements as claimed in one of claims 1 to 12, which serve(s) as a rotor bearing, in particular a bowl bearing.

## Revendications

1. Disposition de palier avec au moins un roulement (30), en particulier pour l'appui d'un rotor, en particulier d'un tambour (2), d'une centrifugeuse, en particulier d'une centrifugeuse à vis à bol plein (1), présentant un dispositif de refroidissement du roulement (10) avec au moins une conduite d'arrivée de lubrifiant (28), au moins une conduite d'évacuation de lubrifiant (32) et une conduite d'évacuation d'air de refroidissement (33) séparée,
dans laquelle le dispositif de refroidissement du roulement (10) présente en outre au moins une conduite d'arrivée d'air de refroidissement (31),
**caractérisée en ce qu'**une ouverture d'entrée (36) de la conduite d'évacuation de lubrifiant (32) se trouve sur un plus grand rayon de courbure que l'ouverture d'entrée (37) de la conduite d'évacuation d'air de refroidissement (33).

2. Disposition de palier selon la revendication 1, **caractérisée en ce que** la conduite d'évacuation de lubrifiant (32) est disposée à distance de la conduite d'évacuation d'air de refroidissement (33).

3. Disposition de palier selon l'une des revendications précédentes,
**caractérisée en ce que** la conduite d'arrivée de lubrifiant (28) est disposée à distance de la conduite d'arrivée d'air de refroidissement (31).

4. Disposition de palier selon l'une des revendications précédentes,
**caractérisée en ce que** la conduite d'évacuation d'air de refroidissement (33) est disposée à distance du palier.

5. Disposition de palier selon l'une des revendications précédentes,
**caractérisée en ce que** la conduite d'arrivée de lubrifiant est disposée en face de la conduite d'évacuation d'air de refroidissement (33) et la conduite d'arrivée d'air de refroidissement (31) en face de la conduite d'évacuation de lubrifiant (32) par rapport au roulement (30).

6. Disposition de palier selon l'une des revendications précédentes,
**caractérisée en ce qu'**un flux de lubrifiant amené vers le roulement (30) par la conduite d'arrivée de lubrifiant (28) et un flux d'air de refroidissement amené vers le roulement (30) par la conduite d'arrivée d'air de refroidissement (31) sont amenés à travers des ouvertures axiales du roulement (30) entre la bague intérieure du roulement (18) et la bague extérieure du roulement (20).

7. Disposition de palier selon l'une des revendications précédentes,
**caractérisée en ce que** la conduite d'arrivée de lubrifiant (28) est un alésage qui se rétrécit vers l'aval en forme de buse.

8. Disposition de palier selon l'une des revendications précédentes,
**caractérisée en ce que** la conduite d'arrivée de lubrifiant (28) débouche par une buse (29) au niveau du roulement (30) dans un espace intérieur d'un carter (19).

9. Disposition de palier selon l'une des revendications précédentes,
**caractérisée en ce que** le roulement (30) est rendu étanche vis-à-vis de l'environnement et vis-à-vis d'un arbre creux (11) par des garnitures d'étanchéité (14, 15 et 24, 26).

10. Disposition de palier selon l'une des revendications précédentes,
**caractérisée en ce que** les garnitures d'étanchéité (24, 26) qui assurent l'étanchéité du roulement (30) vis-à-vis de l'environnement sont des garnitures à action dynamique.

11. Disposition de palier selon l'une des revendications précédentes,
**caractérisée en ce que** la conduite d'arrivée d'air de refroidissement et la conduite d'arrivée de lubrifiant sont réalisées comme une seule conduite intégrée.

12. Centrifugeuse, en particulier décanteur ou séparateur, avec une ou plusieurs dispositions de palier selon l'une des revendications 1 à 12 qui sert ou servent de palier de rotor, en particulier de palier de tambour.
